# EUROPÄISCHE PATENTSCHRIFT

(11) **EP 3 113 985 B1**
(45) Veröffentlichungstag und Bekanntmachung des Hinweises auf die Patenterteilung: **31.01.2018**
(21) Anmeldenummer: 15707935.1
(22) Anmeldetag: 03.03.2015
(51) Int. Cl.: B60R 21/02

(54) **SPERRVORRICHTUNG FÜR EINE ACHSE**
LOCKING DEVICE FOR AN AXLE
DISPOSITIF DE BLOCAGE DESTINÉ À UN AXE

(30) Priorität: 03.03.2014 DE 102014102806
(43) Veröffentlichungstag der Anmeldung: 11.01.2017
(73) Patentinhaber: Mack Rides GmbH & Co. KG, 79183 Waldkirch (DE)
(72) Erfinder: BURGER, Günter, 79183 Waldkirch (DE); SORNIK, Frank, 79183 Waldkirch (DE); KRAUS, Michael, 79238 Ehren-Kirchen (DE)
(74) Vertreter: Westphal, Mussgnug & Partner Patentanwälte mbB
(86) Internationale Anmeldenummer: PCT/EP2015/054431
(87) Internationale Veröffentlichungsnummer: WO 2015/132265

(56) Entgegenhaltungen:
- EP-A1- 1 920 988
- DE-A1- 2 518 715
- DE-A1- 3 237 684

## Beschreibung

Die Erfindung betrifft eine Sperrvorrichtung gemäß den Merkmalen des Oberbegriffs des Anspruchs 1.

Eine solche Sperrvorrichtung ist aus DE 25 18 715 A1 bekannt.

Sperrvorrichtungen für Achsen, mit denen die Drehung der Achse in eine Richtung unterbunden werden kann, so dass allenfalls noch eine Drehung der Achse in die Gegenrichtung erfolgen kann, sind für eine Vielzahl von Anwendungen von großer Bedeutung. Exemplarisch wird nachfolgend Bezug genommen auf die Verwendung im Zusammenhang mit der Personensicherung bei Fahrgeschäften, insbesondere Fahrgeschäften für Vergnügungsparks, Rummelplätze und für eine Kirmes, wo z.B. ein Sicherungsbügel an den Körper eines Fahrgasts geklappt wird, um diesen gegen Herausfallen zu sichern.

Diese Anwendung ist deshalb besonders anspruchsvoll, weil einerseits ein Personenschaden durch Herausfallen der Person unbedingt zu verhindern ist, andererseits aber eine zu enge Sicherung, die zu viel Druck auf die Person ausübt, überaus unangenehm und möglicherweise sogar gefährlich sein kann, weil regelmäßig hohe Kräfte bei der Fahrt wirken, die einen schon im Ruhezustand vorhandenen Druck auf den Fahrgast um ein Vielfaches verstärken können. Diese spezielle und wegen ihrer charakteristischen Anforderungen besonders anspruchsvolle Anwendung ist aber nicht als Beschränkung der Verwendbarkeit der nachfolgend beschriebenen erfindungsgemäßen Sperrvorrichtung zu sehen, die auch in anderem Kontext vorteilhaft einsetzbar ist.

Die vielleicht einfachste derartige Sperrvorrichtung für eine Achse ist ein Zahnrad mit einer asymmetrischen Verzahnung, die eine sanft ansteigende und eine steil abfallende Flanke aufweist, in die eine Sperrklinke eingreift. Damit kann eine mit dem Zahnrad gekoppelte Achse in die Richtung gedreht werden, in der die Drehung die Sperrklinke die sanft ansteigende Flanke hinauf führt, während die Bewegung in die Gegenrichtung gesperrt ist. In der konkreten Anwendung für das Sperren eines Sicherungsbügels würde also der Fahrgast den mittelbar oder unmittelbar mit dem Zahnrad verbundenen Sicherungsbügel an sich heranziehen, bis eine gewünschte Position erreicht ist. Beim Heranziehen rutscht die Sperrklinke über die sanft ansteigenden Flanken, und rastet in der gewünschten Position ein, in der sie verbleibt, bis sie -üblicherweise nach der Fahrt- durch einen Lösemechanismus gelöst wird.

Derartige mechanisch aufgebaute Sperrvorrichtungen haben allerdings zwei gravierende Probleme: Erstens sind sie nicht stufenlos verstellbar, da sie vordefinierte Rastpositionen aufweisen. Jede eingestellte Position der Sperrvorrichtung stellt somit einen Kompromiss zwischen der idealen Position der Achse, die durch die Sperrvorrichtung gesperrt wird, und den verfügbaren Rastpositionen dar. Zweitens sind sie unter Sicherheitsaspekten problematisch, weil die Trägheit der Sperrklinke es erlauben kann, durch einen plötzlichen Wechsel der Bewegungsrichtung ausgehend von der Position an einer Zahnspitze die Sperrvorrichtung zumindest ein Stück weit zu lösen.

Ein Beispiel für eine nach diesem Grundprinzip arbeitende Sperrvorrichtung für die Anwendung des Sperrens des Sicherungsbügels eines Fahrgeschäftes ist aus der EP 0 911 224 A1 bekannt.

Als Alternative zu solchen mechanischen Sperrvorrichtungen können solche verwendet werden, bei denen ein Antrieb für den Sicherungsbügel vorgesehen ist, der in einer Sicherungsposition blockiert wird. Insbesondere sind Pneumatik- oder Hydraulikantriebe bekannt, mit denen die Achse in eine vorgegebene Position verfahren wird, in der dann der Antrieb zeitweilig blockiert wird. Auch solche Systeme, wie sie z.B. aus der DE 203 14 975 U1 bekannt sind, weisen aber zwei Probleme auf: Einerseits muss für sicherheitsrelevante Anwendungen, insbesondere solche, die die Personensicherheit betreffen, wie z.B. bei Sicherheitsbügeln bei Fahrgeschäften gewährleistet sein, dass auch bei einem Ausfall des Antriebs, beispielsweise bei einem Stromausfall oder einem Leck im Pneumatik- oder Hydraulikkreis, die Sperrwirkung erhalten bleibt.

Andererseits besteht ein Problem darin, dass die anzusteuernde Sicherungsposition vorgegeben werden muss. Das führt zu Problemen, weil die einen korpulenten Fahrgast ausreichend sichernde Sperrposition unter Umständen für einen dünnen Teenager noch ein Herausfallen erlaubt, während umgekehrt eine Zielposition, die diesen ausreichend sichert, einen zu hohen Druck auf den Körper des korpulenten Fahrgastes ausübt.

Die Aufgabe der Erfindung besteht also darin, eine verbesserte Sperrvorrichtung für eine Achse bereitzustellen, die eine individuelle Festlegung der Sperrposition erlaubt und dabei einen hohen Grad an Sicherheit bietet.

Diese Aufgabe wird gelöst durch eine Sperrvorrichtung mit den Merkmalen des Patentanspruchs 1.

Vorteilhafte Weiterbildungen der Erfindung sind Gegenstand der abhängigen Ansprüche.

Ein Fahrgeschäft mit einem Sicherungsbügel, der eine solche Sperrvorrichtung aufweist, ist Gegenstand des Anspruchs 13.

Die erfindungsgemäße Sperrvorrichtung für eine Achse verfügt über eine Aufnahme für eine Achse oder eine Achse. Das bedeutet mit anderen Worten, dass die Achse, deren Bewegung durch die Sperrvorrichtung in mindestens einer Bewegungsrichtung gesperrt werden soll, wenn sie nicht ohnehin schon einstückig mit der Sperrvorrichtung verbunden ist, über diese Aufnahme mit der Sperrvorrichtung verbindbar, insbesondere drehfest verbindbar ist, so dass jede Drehung der Achse mit einer Drehung der Aufnahme einhergeht.

Ferner umfasst die erfindungsgemäße Sperrvorrichtung einen Zylinder für ein Fluid, der eine Zylinderwand aufweist und einen in dem Zylinder angeordneten Kolben, der zumindest abschnitts- oder stellenweise gegen die Zylinderwand abgedichtet ist, so dass der Innenraum des Zylinders in ein erstes Volumen und ein durch den Kolben vom ersten Volumen getrenntes zweites Volumen aufgeteilt ist. Wenn die Sperrvorrichtung betrieben wird, sind diese Volumina, die den nicht vom Kolben blockierten Innenraum des Zylinders bilden, mit dem Fluid gefüllt. Konkret kann es sich bei dem Zylinder um einen Hydraulikzylinder handeln, wenn es sich -was bevorzugt ist- bei dem Fluid um eine Flüssigkeit, besonders bevorzugt z.B. ein Hydrauliköl, handelt, während es sich in dem Fall, dass das Fluid ein Gas, insbesondere Luft ist, das bevorzugt unter einem Druck von mehreren bar steht, um einen Pneumatikzylinder handelt.

Erfindungsgemäß ist die mechanische Verbindung der Sperrvorrichtung so ausgestaltet, dass die mechanische Verbindung als eine im Kolben (also in den Kolben eingebrachte, z.B. eingefräste) oder am Kolben vorhandene Verzahnung (z.B. eine am Kolben angebrachte Zahnschiene oder Zahnstange), die direkt oder indirekt in ein Zahnrad, an dem die Aufnahme für die Achse angeordnet ist oder das von einem Teilabschnitt der Achse gebildet ist, eingreift, realisiert ist. Dabei ist mit einem indirekten Eingriff insbesondere gemeint, dass gegebenenfalls weitere Zahnräder mit oder ohne Über- oder Untersetzung zwischen das Zahnrad und Verzahnung angeordnet sein können. Die Anordnung der Aufnahme für die Achse am Zahnrad kann z.B. durch Aufschrauben, Anschweißen oder Verkleben der Aufnahme mit dem Zahnrad realisiert werden, während das Zahnrad von einem Teilabschnitt der Achse gebildet ist, wenn dieser Abschnitt radial umlaufend eine Verzahnung aufweist.

Erfindungsgemäß besteht weiterhin eine mechanische Verbindung zwischen dem Kolben einerseits und der Aufnahme der Achse oder der Achse andererseits, so dass die Position des Kolbens im Zylinder die Orientierung der Aufnahme für die Achse oder die Orientierung der Achse bestimmt und umgekehrt. Als Ergebnis dieser mechanischen Verbindung muss also zwingend eine Drehung der Achse oder Aufnahme (wodurch die Orientierung der Achse bzw. der Aufnahme geändert wird) eine Verschiebung des Kolbens im Zylinder mit sich bringen und eine Verschiebung des Kolbens im Zylinder bewirkt zwingend eine Drehung der Achse oder eine Drehung der Aufnahme, also eine Änderung der Orientierung der Achse oder der Aufnahme.

Bei dieser erfindungsgemäß ausgestalteten Sperrvorrichtung wird die gewünschte Sperrwirkung dann dadurch erreicht, dass das erste Volumen mit dem zweiten Volumen über ein Leitungssystem verbunden ist, das einen Leitungsabschnitt aufweist, in dem ein Ventil angeordnet ist.

Wenn das Ventil geöffnet ist, was vorzugsweise der Zustand des Ventils bei Anliegen eines Steuersignals ist, dann ist die Drehung der Aufnahme für die Achse oder der Achse möglich, weil Fluid aus dem ersten Volumen durch das Leitungssystem in das zweite Volumen gelangen kann und umgekehrt. Bei geschlossenem Ventil ist die Drehung der Aufnahme aber gesperrt, weil der Fluidtransport, der für diese Änderung der Orientierung des Lagers für die Achse oder der Achse nötig ist, um die dabei durch die mechanische Verbindung erzwungene Verschiebung des Kolbens zu ermöglichen, durch das Rückschlagventil verhindert wird.

Dementsprechend kann z.B. ein Fahrgast einer Achterbahn im Bahnhof zunächst den Sicherungsbügel stufenlos in eine für seine Anatomie sinnvolle Position bringen. Dann wird durch lokales oder globales Quittieren des Steuersignals das Ventil geschlossen, und der Sicherungsbügel sichert den Fahrgast.

Bevorzugt ist dabei, dass das Ventil ein Rückschlagventil ist, was zur folgenden Funktionsweise der Vorrichtung führt: Wenn z.B. der Fluidtransport aus dem ersten Volumen in das zweite Volumen durch das Leitungssystem in Durchlassrichtung des Rückschlagventils erfolgt, dann ist die Drehung der Aufnahme für die Achse oder der Achse in die Richtung, die zu einer Verschiebung des Kolbens führt, die das erste Volumen verkleinert und das zweite Volumen vergrößert möglich, weil Fluid aus dem ersten Volumen durch das Leitungssystem in das zweite Volumen gelangen kann. Die Drehung in die Gegenrichtung ist aber gesperrt, weil der Fluidtransport, der für diese Änderung der Orientierung des Lagers für die Achse oder der Achse nötig ist, um die dabei durch die mechanische Verbindung erzwungene Verschiebung des Kolbens zu ermöglichen, durch das Rückschlagventil verhindert wird.

Damit ermöglicht die so ausgestaltete Sperrvorrichtung einerseits eine im Wesentlichen kontinuierliche Einstellung der Achse bzw. der Aufnahme für die Achse entgegen der Sperrrichtung, während zugleich die Sperrwirkung durch Mittel erreicht wird, die nur im Fall einer Leckage im Leitungssystem versagen.

Im Verwendungsfall für den Sicherungsbügel eines Fahrgeschäfts kann diese Sperrvorrichtung somit den Passagieren ein stufenloses, an die individuelle Anatomie des Fahrgastes angepasstes Schließen des Sicherungsbügels ermöglichen, das der Fahrgast auch selbst ausführen kann. Gleichzeitig ist ein Öffnen des Sicherungsbügels gesperrt, und zwar insbesondere auf eine Art und Weise, die weder durch einen Stromausfall noch durch aktive Manipulation des Fahrgastes aufgehoben werden kann.

In einer besonders bevorzugten Weiterbildung der Erfindung ist in dem Leitungssystem ein parallel zu dem Leitungsabschnitt, in dem das Rückschlagventil angeordnet ist, verlaufender Leitungsabschnitt vorgesehen und ein Ventil zum Umschalten zwischen diesen Leitungsabschnitten vorhanden. Dadurch kann durch das Schalten des Ventils, das bevorzugt elektrisch auslösbar ist, auf einfache Weise die Sperrung überwunden werden. Dies kann z.B. im Verwendungsfall in einem Fahrgeschäft genutzt werden, um die Sicherungsbügel am Ende der Fahrt zu entriegeln. Dabei ist aus Sicherheitsgründen zu bevorzugen, dass im nicht geschalteten Zustand des Ventils, das beispielsweise als Zweiwege-Ventil oder Dreiwege-Ventil ausgestaltet sein kann, der Fluidfluss über das Rückschlagventil erfolgt.

Grundsätzlich kann im Übrigen auch in dem parallel verlaufenden Leitungsabschnitt ein in entgegengesetzter Flussrichtung sperrendes Rückschlagventil vorgesehen sein. Dies erlaubt es dann, durch das Schalten des Ventils zum Umschalten zwischen den Leitungsabschnitten die Sperrrichtung zu ändern.

Eine weitere vorteilhafte Weiterbildung der Erfindung sieht vor, dass -im Fall der Verwendung eines Rückschlagventils in Durchlassrichtung des Rückschlagventils gesehen bevorzugt stromaufwärts des Rückschlagventils- ein Druckspeicher für das Fluid vorgesehen ist. Durch diese Maßnahme kann sichergestellt werden, dass Druckschwankungen, z.B. als Folgeeffekt von Temperaturschwankungen, vermieden werden und eine Volumenkompensation möglich ist.

Vorteilhaft ist es ferner, wenn im Leitungssystem eine Befüllkupplung und/oder ein Entlüftungsventil für das Fluid vorgesehen sind. Diese Maßnahmen können schon als Einzelmaßnahme, bevorzugt aber kumulativ angewendet, auf einfache Weise sicherstellen, dass das zum Betrieb des Zylinders bzw. der Sperrvorrichtung verwendete Fluid ideale Betriebseigenschaften aufweist.

Eine weitere vorteilhafte Weiterbildung der Erfindung sieht vor, dass Rückstellmittel vorhanden sind, die so ausgeführt sind, dass sie eine Bewegung des Kolbens in eine Richtung, bei Verwendung eines Rückschlagventils bevorzugt die zu einem Transport von Fluid in die durch das Rückschlagventil gesperrte Richtung, unterstützen. Beispielsweise können derartige Mittel mechanisch durch eine Druckfeder realisiert werden.

Diese Maßnahme führt einerseits dazu, dass die Sperrvorrichtung sich selbsttätig öffnet, wenn sie gelöst wird. Im Anwendungsbeispiel für das Sperren des Sicherheitsbügels eines Fahrgeschäfts für einen Vergnügungspark bedeutet dies, dass z.B. nach Ende der Fahrt der Sicherheitsbügel freigegeben wird und sich daraufhin selbsttätig öffnet. Andererseits kann der dadurch bewirkte zusätzliche Widerstand beim Schließen dazu beitragen, ein versehentliches zu enges Schließen des Sicherheitsbügels zu vermeiden.

Ein besonderer Vorzug des vorgeschlagenen Aufbaus der Sperrvorrichtung liegt darin, dass auf einfachste Weise eine zweite, unabhängige, redundante Sicherung realisiert werden kann. Dies ist für sicherheitsrelevante Anwendungen, wie bei Fahrgeschäften für Vergnügungsparks, von besonderer Bedeutung weil dadurch selbst beim Auftreten eines Lecks in einem Zylinder oder Leitungssystem die Sperrvorrichtung weiterhin zuverlässig ihre Funktion erfüllt.

Diese Redundanz wird dadurch erreicht, dass eine mechanische Verbindung zwischen der Aufnahme für die Achse oder mit der Achse, und einem zweiten Kolben, der in einem zweiten Zylinder für ein Fluid, der eine zweite Zylinderwand aufweist, angeordnet ist, vorhanden ist, so dass die Orientierung der Aufnahme für die Achse oder die Orientierung der Achse die Position des zweiten Kolbens im zweiten Zylinder bestimmt. Dabei ist der in dem zweiten Zylinder angeordnete zweite Kolben zumindest abschnitts- oder stellenweise gegen die zweite Zylinderwand abgedichtet, so dass der Innenraum des zweiten Zylinders in ein drittes Volumen (des Gesamtsystems, entsprechend dem ersten Volumen des zweiten Zylinders) und ein durch den zweiten Kolben vom dritten Volumen getrenntes viertes Volumen (des Ge-Ein besonderer fertigungstechnischer Vorteil ist dabei darin zu sehen, dass beide Zylinder mit ihren jeweiligen Leitungssystemen auf derselben Baugruppe basieren können, die lediglich in einer anderen, insbesondere punktsymmetrischen Orientierung zur Achse angeordnet sind.

Besonders bevorzugt ist es, wenn -insbesondere wenn auch- in dem zweiten Leitungssystem ein parallel zu dem Leitungsabschnitt, in dem das zweite Rückschlagventil angeordnet ist, verlaufender Leitungsabschnitt vorgesehen ist und wenn ein zweites Ventil zum Umschalten zwischen diesen Leitungsabschnitten vorhanden ist. Dabei können das erste und das zweite Ventil gemeinsam angesteuert werden, ein Verzicht auf eine gemeinsame Ansteuerung kann aber aus Sicherheitsaspekten zu bevorzugen sein, weil dann bei einer Fehlfunktion einer der Ventilsteuerungen, die die Sperrung eines der Zylinder versehentlich aufhebt, der zweite Zylinder noch immer die Sperrung aufrecht erhält.

Aus denselben Gründen wie beim ersten Zylinder und dessen Leitungssystem ist es vorteilhaft, wenn (auch) beim zweiten Leitungssystem in Durchlassrichtung des zweiten Rückschlagventils gesehen stromaufwärts des zweiten Rückschlagventils ein Druckspeicher als Volumenkompensator für das Fluid vorgesehen ist und/oder vorteilhaft, wenn im zweiten Leitungssystem eine Befüllkupplung und/oder ein Entlüftungsventil für das Fluid vorgesehen sind.

Die Präzision des Sperrmechanismus kann erhöht und ein spielfreies Sperren der Achse ermöglicht werden, wenn an mindestens einem Zylinder, bevorzugt am ersten und am zweiten Zylinder, ein Druckspeicher für das Fluid vorgesehen ist.

Die Erfindung wird nachfolgend anhand von Figuren, die exemplarische Ausführungsbeispiele zeigen, näher erläutert. Es zeigen:
- Fig. 1:: Ein Hydraulik- oder Pneumatikschema einer ersten Ausführungsform einer Sperrvorrichtung,
- Fig. 2a:: den mechanischen Aufbau der Sperrvorrichtung aus Figur 1 im offenen Zustand im Querschnitt,
- Fig. 2b:: den mechanischen Aufbau der Sperrvorrichtung aus Figur 1 im geschlossenen Zustand im Querschnitt,
- Fig. 3:: ein Hydraulik- oder Pneumatikschema einer zweiten Ausführungsform einer Sperrvorrichtung,
- Fig. 4a:: den mechanischen Aufbau der Sperrvorrichtung aus Figur 3 im offenen Zustand im Querschnitt,
- Fig. 4b:: den mechanischen Aufbau der Sperrvorrichtung aus Figur 3 im geschlossenen Zustand im Querschnitt,
- Fig. 5:: eine Außenansicht der Sperrvorrichtung aus Figur 3,
- Fig. 6:: ein Hydraulik- oder Pneumatikschema einer dritten Ausführungsform einer Sperrvorrichtung, und
- Fig. 7:: den mechanischen Aufbau der Sperrvorrichtung aus Figur 6 im Querschnitt.

Gleiche Bestandteile gleicher Ausführungsformen sind in allen Figuren mit denselben Bezugszeichen gekennzeichnet, soweit nichts anderes angegeben ist.

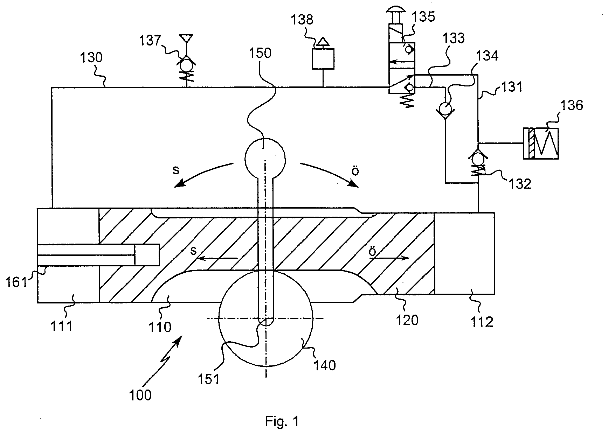

Figur 1 zeigt ein Hydraulik- oder Pneumatikschema (wobei sich diese Schemata von ihrem Aufbau her lediglich hinsichtlich Art und Zustand des verwendeten Fluids unterscheiden) einer ersten Ausführungsform einer Sperrvorrichtung 100 mit einem daran angeordneten Sicherungsbügel 150, dessen Bewegung um seine Achse 151 durch in Öffnungsrichtung ö(d.h. in der Darstellung der Figur 1 nach rechts) durch die Sperrvorrichtung 100 gesperrt, aber in Schließrichtung s (d.h. in der Darstellung der Figur 1 nach links) durch die Sperrvorrichtung 100 zugelassen wird.

Man erkennt einen Zylinder 110, dessen Innenraum von einem ersten Volumen 111, einem zweiten Volumen 112 und dem Raum, den der im Zylinder angeordneten Kolben 120 einnimmt, gebildet wird. Das erste Volumen 111 und das zweite Volumen 112 sind jeweils mit einem aus Gründen der Übersichtlichkeit nicht dargestellten Fluid gefüllt und über ein Leitungssystem 130 miteinander verbunden.

Das Leitungssystem 130 weist einen Leitungsabschnitt 131 auf, in dem ein beispielhaft als Rückschlagventil 132 ausgeführtes Ventil so angeordnet ist, dass aus dem ersten Volumen 111 durch den Leitungsabschnitt 131 in das zweite Volumen 112 strömendes Fluid vom Rückschlagventil 132 durchgelassen wird und aus dem zweiten Volumen 112 durch den Leitungsabschnitt 131 in Richtung auf das erste Volumen 111 strömendes Fluid vom Rückschlagventil 132 gesperrt wird. In Durchlassrichtung des Rückschlagventils 132 gesehen stromaufwärts des Rückschlagventils 132 ist ein Druckspeicher 136 im Leitungsabschnitt 131 vorgesehen.

Parallel zum Leitungsabschnitt 131 ist ein weiterer Leitungsabschnitt 133 angeordnet, der ein Rückschlagventil 134 mit umgekehrter Durchlassrichtung aufweist, also Fluidstrom aus dem ersten Volumen 111 in das zweite Volumen 112 sperrt und aus dem zweiten Volumen 112 in das erste Volumen 111 durchlässt.

Mit einem als Zweiwegeventil ausgeführten Ventil 135 kann bestimmt werden, ob das erste Volumen 111 mit dem zweiten Volumen 112 über den Leitungsabschnitt 131 oder über den parallel dazu angeordneten Leitungsabschnitt 133 verbunden ist. Dabei ist das Ventil 135 so konfiguriert, dass es nur in Anwesenheit eines mechanischen oder elektrischen Schaltpulses einen Transport von Fluid durch den parallelen Leitungsabschnitt 133 erlaubt und diesen sonst sperrt.

Ferner ist im Leitungssystem 130 noch eine Befüllkupplung 137 für Fluid und -insbesondere bei einem Hydrauliksystem- ein Entlüftungsventil 138 vorgesehen, um optimale Betriebsbedingungen für das Fluid bereitstellen zu können.

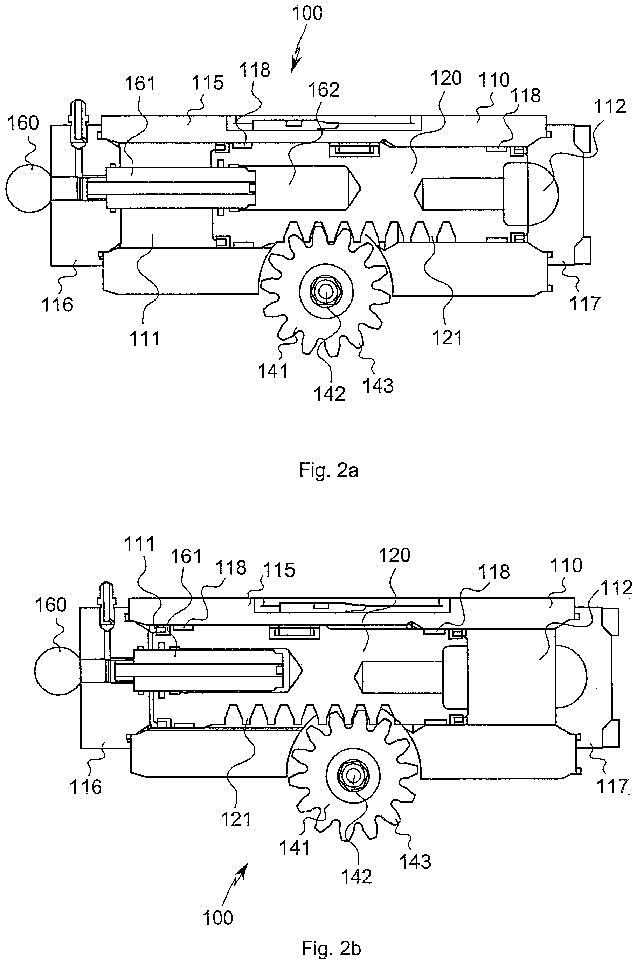

Der Kolben 120 ist über eine -in Figur 1 lediglich schematisch dargestellte- mechanische Verbindung 140 mit einem in der Darstellung der Figur 1 senkrecht in die Zeichnung hinein verlaufenden Abschnitt eines Sicherungsbügels 150 verbunden, der die (Dreh-)Achse 151 des Sicherungsbügels 150 darstellt, wobei die mechanischen Verbindung, wie weiter unten bei der Beschreibung der Figuren 2a,b, die den mechanischen Aufbau der Sperrvorrichtung 100 zeigen, deutlich werden wird, so ausgeführt ist, dass die Position des Kolbens 120 im Zylinder 100 die Orientierung der Aufnahme für die Achse 151 oder die Orientierung der Achse 151 bestimmt und umgekehrt.

Wird der Sicherungsbügel 150 in Schließrichtung s bewegt, so bewirkt die mechanische Verbindung 140, dass sich der Kolben 120 ebenfalls in Schließrichtung s bewegt, so dass sich das erste Volumen 111 verkleinert, während sich zugleich das zweite Volumen 112 vergrößert. Dementsprechend entsteht ein Überdruck im ersten Volumen 111 und ein Unterdruck im zweiten Volumen 112, der durch einen Fluidstrom ausgeglichen werden muss.

Es wird also Fluid aus dem ersten Volumen 111 in das Leitungssystem 130 hineingedrängt. Am Ventil 135 gelangt das Fluid in den Leitungsabschnitt 131, trifft in Durchlassrichtung auf das Rückschlagventil 132 und kann in das zweite Volumen 112 einströmen und einen Druckausgleich herstellen.

Wird aber der Sicherungsbügel 150 in Öffnungsrichtung ö bewegt, so bewirkt die mechanische Verbindung 140, dass sich der Kolben 120 ebenfalls in Öffnungsrichtung ö bewegt, so dass sich das erste Volumen 111 vergrößert, während sich zugleich das zweite Volumen 112 verkleinert. Dementsprechend entsteht ein Unterdruck im ersten Volumen 111 und ein Überdruck im zweiten Volumen 112, der durch einen Fluidstrom ausgeglichen werden muss.

Dieser Fluidstrom kann aber nicht fließen, denn das aus dem zweiten Volumen 112 in den Leitungsabschnitt 131 des Leitungssystems 130 hineingedrängtes Fluid trifft in Sperrichtung auf das Rückschlagventil 132 und wird am Weiterfluss gehindert. Auch durch den parallelen Leitungsabschnitt 133 kann das Fluid nicht fließen, denn wenngleich das Rückschlagsventil 134 in Durchlassrichtung vom Fluid passiert würde, sperrt das Ventil 135 den Abfluss aus dem parallelen Leitungsabschnitt 133. Als Konsequenz ist ein Druckausgleich nicht möglich, und die Bewegung des Sicherungsbügels 150 in Öffnungsrichtung ö unterbleibt. Wegen der Inkompressibilität von Flüssigkeiten gilt dies in besonderem Maße, wenn der Zylinder 110 ein Hydraulikzylinder ist; in Anbetracht der hohen Arbeitsdrücke in Pneumatikzylindern lässt sich der Effekt aber auch in einem Pneumatiksystem erzielen.

Die Sperrvorrichtung 100 kann aber entsperrt werden, um eine Bewegung des Sicherungsbügels 150 in Öffnungsrichtung ö zu ermöglichen. Dazu erhält das Ventil 135 einen Schaltpuls, der es umschaltet, so dass ein Fluidstrom durch das Ventil in den bzw. aus dem parallelen Leitungsabschnitt 133 strömen kann und nicht mehr durch den Leitungsabschnitt 131. Als Konsequenz ist in dieser Schaltposition des Ventils 135 ein Fluidstrom vom zweiten Volumen 112 in das erste Volumen 111 über das Leitungssystem 130 möglich, aber nicht aus dem ersten Volumen 111 in das zweite Volumen 112, da dieser in Sperrichtung auf das Rückschlagventil 134 trifft. Dementsprechend kann in dieser Schaltposition des Ventils 135 eine Bewegung des Sicherungsbügels 150 in Öffnungsrichtung ö erfolgen, nicht aber in Schließrichtung s.

In der in Figur 1 gezeigten Ausführungsform ist eine Unterstützung der Öffnungsbewegung durch einen Druckspeicher 160, der über einen Plungerkolben 161, der bei Bewegung des Kolbens 120 in Schließrichtung in eine Bohrung 162 im Kolben 120 eingeführt wird dem Innenraum der Bohrung 162 im Kolben 120 in Verbindung steht, vorgesehen. Dementsprechend wird Fluid bei der Schließbewegung des Kolbens 120 im Druckspeicher 160 unter Druck gespeichert, der sich entspannt, wenn die Bewegung in Öffnungsrichtung ö freigegeben ist und damit das Öffnen des Sicherungsbügels 150 unterstützt. Wie bereits erwähnt, gibt es jedoch auch andere Möglichkeiten, die Unterstützung der Öffnungsbewegung zu gewährleisten, z.B. durch eine Pumpe oder eine andere Energiequelle, die das Fluid hineinpumpt oder hineindrückt oder eine mechanische Beeinflussung des Kolbens, z.B. durch eine Hubspindel.

Weitere Details des Aufbaus der Sperrvorrichtung 100 lassen sich aus der Schnittdarstellung der Figuren 2a und 2b entnehmen, die die mechanischen Komponenten mit Ausnahme des Sicherungsbügels 150- unter Auslassung des Leitungssystems 130 mit allen zugehörigen Teilen, also der hydraulischen oder pneumatischen Komponenten, einschließlich der Anschlüsse zum ersten Volumen 111 und zum zweiten Volumen 112- zeigt. Insbesondere erkennt man in dieser Darstellung gut den Aufbau von Zylinder 110 und die Anordnung des Kolbens 120 in diesem sowie die Art und Wirkungsweise der mechanischen Verbindung 140.

Der Zylinder 110 ist aus einem Zylinderrohr 115 mit zwei stirnseitigen Kappen 116,117 zusammengesetzt. Der Kolben 120 ist mit in der Nähe seiner Stirnseiten angeordneten Kolbendichtungen 118 fluiddicht gegen das Zylinderrohr 115 abgedichtet und weist an einer Seite eine sich über seinen Mittelabschnitt erstreckende Verzahnung (d.h. eine Folge von linear hintereinander in axialer Richtung des Kolbens angeordneten Zähnen) 121 auf.

Da in diesen Abschnitt wegen der Kolbendichtungen 118 kein Fluid eindringen kann, kann die mechanische Verbindung 140 durch ein Zahnrad 141 realisiert werden, dessen Achse 142 mit der Achse 151 des Sicherungsbügels 150 zusammenfällt, so dass die (Dreh- oder Klapp-) Bewegung des Sicherungsbügels 150 in eine Richtung das Zahnrad 141 in dieselbe Richtung dreht und dabei den Kolben 120 durch das Zusammenwirken der Zähne 143 des Zahnrads 141 mit der Verzahnung 121 des Kolbens 120 verschiebt. Das Zusammenfallen der Achsen 142, 151 kann durch eine drehfeste Verbindung erreicht werden, beispielsweise durch eine auf der Drehachse des Zahnrads 140 angeordnete Aufnahme für die Achse 151, in der die Achse 151 in einer drehfesten Verbindung angeordnet, insbesondere befestigt ist. Die Figuren 2a und 2b zeigen die Positionen des Kolbens 120 im Zylinder 110 bei einer Position des Zahnrads 141, die einer völlig geöffneten bzw. einer völlig geschlossenen Stellung des Sicherungsbügels 150 entsprechen.

Allerdings ist beim Vorsehen eines Getriebes statt des einzelnen Zahnrads 141 das Zusammenfallen der Achsen 141, 151 keine zwingende Bedingung, und diese Maßnahme kann zu einer Änderung der Drehrichtungen von Sicherungsbügel 150 und Zahnrad 140 relativ zueinander führen.

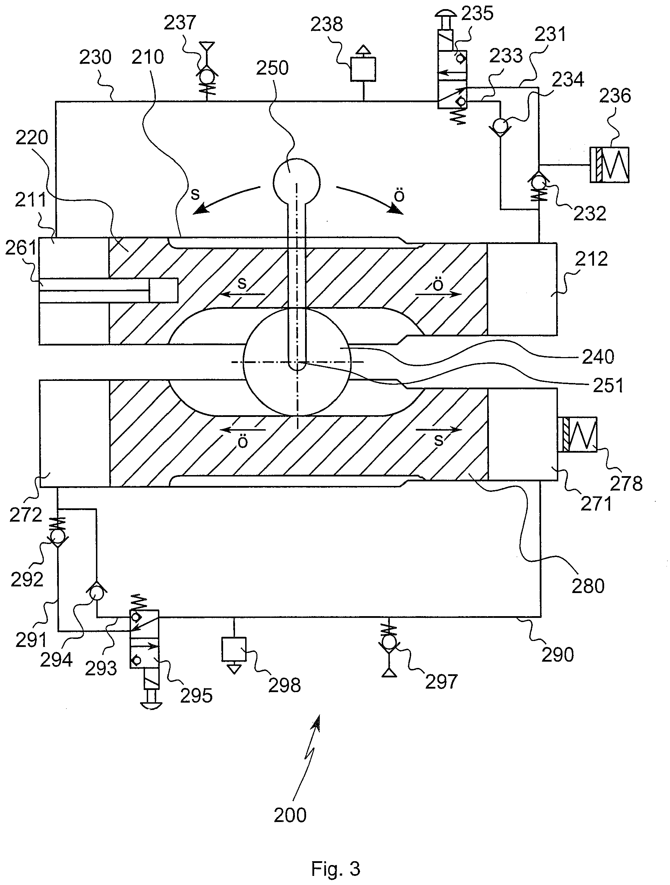

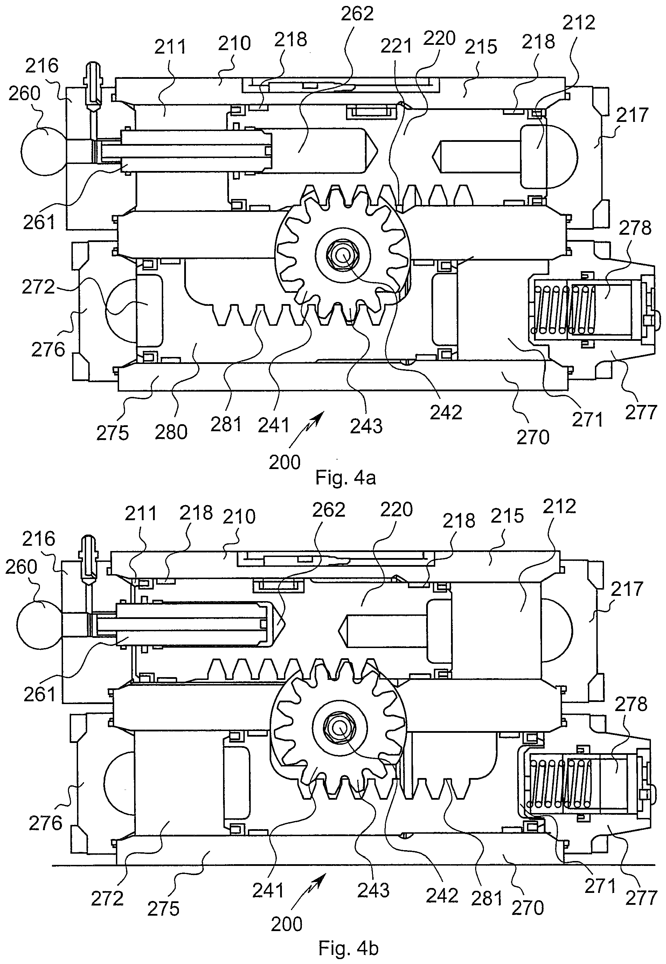

Die Figuren 3 sowie 4a und b zeigen eine zweite Ausführungsform einer Sperrvorrichtung 200, die sich von der Sperrvorrichtung 100 lediglich durch eine redundante Auslegung unterscheidet. Zusätzlich zu dem Aufbau, der oben anhand der Figuren 1 und 2a, b beschrieben wurde und der bei der Sperrvorrichtung 200 insoweit identisch vorliegt, wobei die zur Bezeichung der entsprechenden Bauteile in den Figuren 3 sowie 4a,b verwendeten Bezugszeichen sich durch Addition der Zahl hundert zu den Bezugszeichen der Figuren 1,2a,2b ergeben, ist hier die mechanische Verbindung 240 zur Achse 251 so ausgelegt, dass sie auch zu einem zweiten Kolben 280, der in einem zweiten Zylinder 270 für ein Fluid, der als zweite Zylinderwand das Zylinderrohr 275 aufweist und stirnseitig mit Kappen 276,277 abgeschlossen ist, besteht und so ausgestaltet ist, dass die Orientierung der Achse 251 auch die Position des zweiten Kolbens 280 im zweiten Zylinder 270 bestimmt. Erreicht wird dies dadurch, dass der zweite Kolben 280 ebenfalls eine Verzahnung 281 aufweist, in die das Zahnrad 241 eingreift.

Auch der in dem zweiten Zylinder 270 angeordnete zweite Kolben 280 ist durch Kolbendichtungen 288 zumindest abschnitts- oder stellenweise gegen das Zylinderrohr 275 abgedichtet, so dass der Innenraum des zweiten Zylinders 270 in ein drittes Volumen 271 (entsprechend dem ersten Volumen des zweiten Zylinders 270, wobei zu berücksichtigen ist, dass die Drehbewegung des Zahnrads 241 den zweiten Kolben 280 in eine der Bewegungsrichtung des Kolbens 220 entgegengesetzte Richtung verschiebt) und ein durch den zweiten Kolben 280 vom dritten Volumen 271 getrenntes viertes Volumen 272 (entsprechend dem zweiten Volumen des zweiten Zylinders) aufgeteilt ist.

Das dritte Volumen 271 ist mit dem vierten Volumen 272 über ein zweites Leitungssystem 290 verbunden, das einen Leitungsabschnitt 291 aufweist, in dem ein Rückschlagventil 292 angeordnet ist. Parallel zum Leitungsabschnitt 291 ist ein weiterer Leitungsabschnitt 293 angeordnet, der ein Rückschlagventil 294 mit umgekehrter Durchlassrichtung aufweist, also Fluidstrom aus dem dritten Volumen 271 in das vierte Volumen 272 sperrt und aus dem vierten Volumen 272 in das dritte Volumen 271 durchlässt.

Mit einem als Zweiwegeventil ausgeführten Ventil 295 kann bestimmt werden, ob das dritte Volumen 271 mit dem vierten Volumen 272 über den Leitungsabschnitt 291 oder über den parallel dazu angeordneten Leitungsabschnitt 293 verbunden ist. Dabei ist das Ventil 295 so konfiguriert, dass es nur in Anwesenheit eines mechanischen oder elektrischen Schaltpulses einen Transport von Fluid durch den parallelen Leitungsabschnitt 133 erlaubt und diesen sonst sperrt.

Ferner ist im Leitungssystem 290 noch eine Befüllkupplung 297 für Fluid und -insbesondere bei einem Hydrauliksystem- ein Entlüftungsventil 298 vorgesehen, um optimale Betriebsbedingungen für das Fluid bereitstellen zu können.

Wie sich bereits aus dem analogen Aufbau ergibt, ist die hydraulische bzw. pneumatische Wirkungsweise des Leitungssystems 290 bei Verschiebung des zweiten Kolbens 280 im zweiten Zylinder 270 identisch zu der des Leitungssystems 230 bei Verschiebung des Kolbens 220, wenn man berücksichtigt, dass die Kolben 220,280 durch dieselbe Bewegung des Zahnrads 241 in unterschiedliche Richtungen verschoben werden und dass das dritte Volumen 271 dem ersten Volumen 211 sowie das vierte Volumen 272 dem zweiten Volumen 212 entsprechen. Zugleich bedeutet dies aber, dass die Sperrwirkung von beiden Systemen jeweils einzeln erbracht werden kann, so dass auch bei einem Versagen eines Systems, z.B. wegen eines Lecks in einem der Leitungssystems 230,290, der Sicherungsbügel 250 noch sicher gesperrt ist.

Zusätzlich ist am zweiten Zylinder 270 auf seiner dem dritten Volumen 271 zugewandten Seite ein Druckspeicher 278 vorgesehen, der ein Zahnspiel vermeidet.

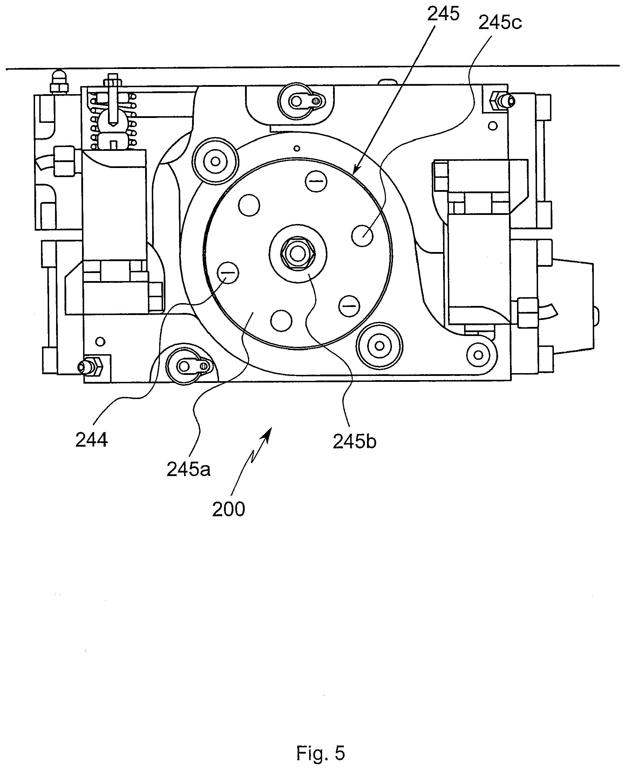

Anhand der Figur 5, die eine Außenansicht der Sperrvorrichtung 200 zeigt, soll insbesondere exemplarisch eine mögliche Verbindung mit der Achse 251 über eine Aufnahme 245 für die Achse 251 erläutert werden. Die Befestigung der Achse 251 über eine solche Aufnahme 245 ist gegenüber einer integralen Verbindung der Achse mit der Sperrvorrichtung 200 bevorzugt, da sie einen modularen Aufbau erlaubt.

Die Aufnahme 245 ist als eine auf dem Körper des Zahnrads 241 mit Schrauben 244 befestigte Scheibe 245a mit einer zentral darin angeordneten, bevorzugt an den Durchmesser der Achse 251 angepassten Vertiefung 245b und mit in der Scheibe 245a angeordneten Gewindebohrungen 245c ausgeführt. Durch Einführen eines Endabschnitts der Achse 251 in die Vertiefung 245b und anschließende Befestigung der Achse 251 darin wird damit eine Verbindung hergestellt. Die Befestigung kann beispielsweise durch direktes Verschweißen geschehen, es kann aber z.B. auch eine Scheibe drehfest an der Achse 251 befestigt werden, die dann mit in dieser Scheiben angeordnete Öffnungen durchsetzenden Schrauben mit den Gewindebohrungen 245c verschraubt wird.

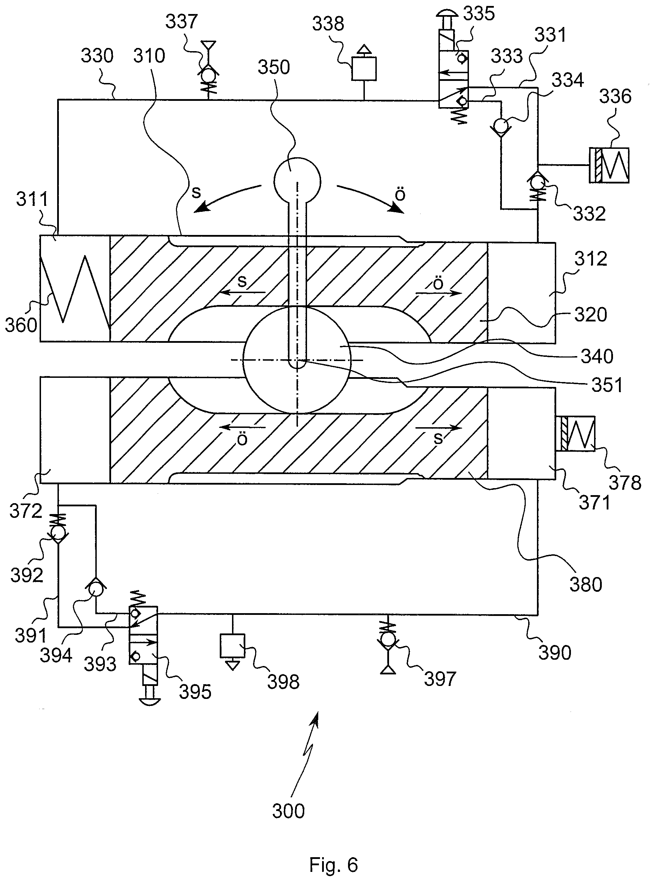

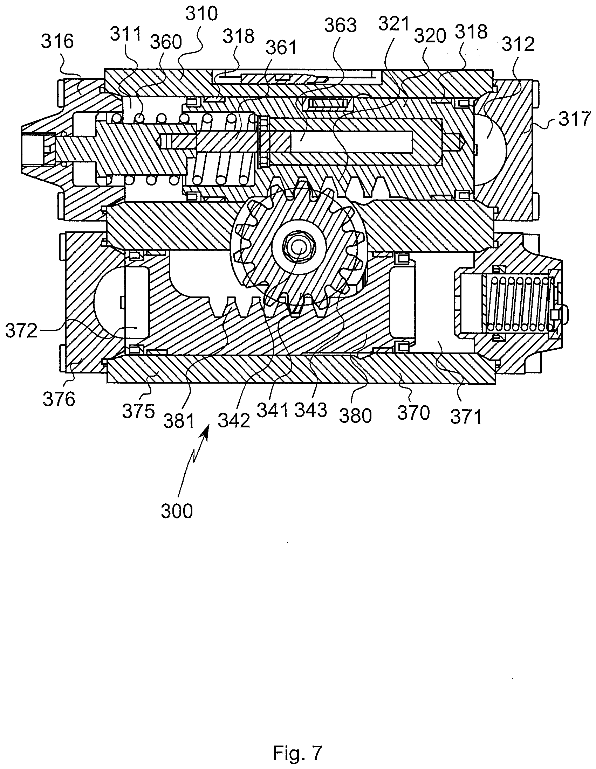

Die dritte Ausführungsform einer Sperrvorrichtung 300, die in den Figuren 6 und 7 dargestellt ist, die weist eine hochgradige Ähnlichkeit zur Sperrvorrichtung 200 auf, weshalb die zur Bezeichung einander entsprechender Bauteile in den Figuren 6 und 7 verwendeten Bezugszeichen sich durch Addition der Zahl hundert zu den Bezugszeichen der Figuren 3,4a,4b ergeben und weitgehend auf die vorstehenden Figurenbeschreibungen verwiesen werden kann. Der Unterschied zur Sperrvorrichtung 200 besteht in der Ausgestaltung der Öffnungshilfe. Statt des über den Plungerkolben 261 mit dem Innenraum der Bohrung 262 im Kolben 220 verbundenen Druckspeichers 260 ist eine Druckfeder 360 im ersten Volumen 311 angeordnet, die sich an Kolben 320 und stirnseitiger Kappe 316 abstützt und durch einen Führungsstab 361 in der Bohrung 362 geführt ist.

### Bezugszeichenliste

- 100,200,300: Sperrvorrichtung
- 110,210,310: Zylinder
- 111,211,311: erstes Volumen
- 112,212,312: zweites Volumen
- 115,215,315: Zylinderrohr
- 116,216,316: Kappe
- 117,217,317: Kappe
- 118,218,318: Kolbendichtung
- 120,220,320: Kolben
- 121,221,321: Verzahnung
- 130,230,330: Leitungssystem
- 131,231,331: Leitungsabschnitt
- 132,232,332: Rückschlagventil
- 133,233,333: weiterer Leitungsabschnitt
- 134,234,334: Rückschlagventil
- 135,235,335: Ventil
- 136,236,336: Druckspeicher
- 137,237,337: Befüllkupplung
- 138,238,338: Entlüftungsventil
- 140,240,340: mechanische Verbindung
- 141,241,341: Zahnrad
- 142,242,342: Achse (des Zahnrads)
- 143,243,343: Zähne (des Zahnrads)
- 150,250,350: Sicherungsbügel
- 151,251,351: Achse
- 160,260: Druckspeicher
- 161, 261: Plungerkolben
- 162,262,362: Bohrung
- 244: Schraube
- 245: Aufnahme
- 245a: Scheibe
- 245b: Vertiefung
- 245c: Gewindebohrung
- 270,370: zweiter Zylinder
- 271,371: drittes Volumen
- 272,372: viertes Volumen
- 275,375: Zylinderrohr
- 276,277,376,377: Kappe
- 278,378: Druckspeicher
- 280,380: zweiter Kolben
- 281,381: Verzahnung
- 288,388: Kolbendichtung
- 290,390: zweites Leitungssystem
- 291,391: Leitungsabschnitt
- 292,392: Rückschlagventil
- 293,393: paralleler Leitungsabschnitt
- 294,394: Rückschlagventil
- 295,395: Ventil
- 296,396: Druckspeicher
- 297,397: Befüllkupplung
- 298,398: Entlüftungsventil
- 360: Druckfeder
- 361: Führungsstab

- Ö: Öffnungsrichtung
- S: Sperrrichtung

## Patentansprüche

1. Sperrvorrichtung (100,200,300) für eine Achse (151,251,351)
mit einer Aufnahme (245) für eine Achse (151,21,351) oder mit einer Achse (151,251,351),
mit einem Zylinder (110,210,310) für ein Fluid, der eine Zylinderwand aufweist,
mit einem in dem Zylinder (110,210,310) angeordneten Kolben (120,220,320), der zumindest abschnitts- oder stellenweise gegen die Zylinderwand abgedichtet ist, so dass der Innenraum des Zylinders (110,210,310) in ein erstes Volumen (111,211,311) und ein durch den Kolben (120,220,320) vom ersten Volumen (111,211,311) getrenntes zweites Volumen (112,212,312) aufgeteilt ist,
mit einer mechanischen Verbindung (140,240,340) zwischen dem Kolben (120,220,320) einerseits und der Aufnahme (245) der Achse (151,251,351) oder der Achse (151,251,351) andererseits, so dass die Position des Kolbens (120,220,320) im Zylinder (110,210,310) die Orientierung der Aufnahme (245) für die Achse (151,251,351) oder die Orientierung der Achse (151,251,351) bestimmt und umgekehrt,
wobei das erste Volumen (111,211,311) mit dem zweiten Volumen (112,212,312) über ein Leitungssystem (130,230,330) verbunden ist, das einen Leitungsabschnitt (131,231,331) aufweist, in dem ein Rückschlagventil (132,232,332) angeordnet ist,
**dadurch gekennzeichnet, dass** die mechanische Verbindung (140,240,340) als eine im Kolben (120,220,320) oder am Kolben (120,220,320) vorhandene Verzahnung (121,221,321), die direkt oder indirekt in ein Zahnrad (141,241,341), an dem die Aufnahme (245) für die Achse (151,251,351) angeordnet ist oder das von einem Teilabschnitt der Achse (151,251,351) gebildet ist, eingreift, realisiert ist.

2. Sperrvorrichtung (100,200,300) nach Anspruch 1, **dadurch gekennzeichnet, dass** in dem Leitungssystem (130,230,330) ein parallel zu dem Leitungsabschnitt (131,232,332), in dem das Rückschlagventil (132,232,332) angeordnet ist, verlaufender paralleler Leitungsabschnitt (133,233,333) vorgesehen ist und dass ein Ventil (135,235,335) zum Umschalten zwischen diesen Leitungsabschnitten (131,133,231,233,331,333) vorhanden ist.

3. Sperrvorrichtung (100,200,300) nach einem der vorstehenden Ansprüche,
**dadurch gekennzeichnet, dass** ein Druckspeicher (136,236,336) als Volumenkompensator für das Fluid im Leitungssystem (130,230,330) vorgesehen ist.

4. Sperrvorrichtung (100,200,300) nach einem der vorstehenden Ansprüche,
**dadurch gekennzeichnet, dass** im Leitungssystem (130,230,330), eine Befüllkupplung (137,237, 337) und/oder ein Entlüftungsventil (138,238,338) für das Fluid vorgesehen sind.

5. Sperrvorrichtung (100,200,300) nach einem der vorstehenden Ansprüche,
**dadurch gekennzeichnet, dass** Rückstellmittel vorhanden sind, die so ausgeführt sind, dass sie eine Bewegung des Kolbens (120,220,320) in eine Richtung unterstützen.

6. Sperrvorrichtung (200,300) nach einem der vorstehenden Ansprüche,
**dadurch gekennzeichnet, dass** eine weitere mechanische Verbindung (240,340) zwischen der Aufnahme (245) für die Achse (251,351) oder der Achse (251,351) und einem zweiten Kolben (280,380), der in einem zweiten Zylinder (270,370) für ein Fluid, der eine zweite Zylinderwand aufweist, angeordnet ist, vorhanden ist, so dass die Orientierung der Aufnahme (245) für die Achse (251,351) oder die Orientierung der Achse (251,351) die Position des zweiten Kolbens (280,380) im zweiten Zylinder (270,370) bestimmt, wobei der in dem zweiten Zylinder (270,370) angeordnete zweite Kolben (280,380) zumindest abschnitts- oder stellenweise gegen die zweite Zylinderwand abgedichtet ist, so dass der Innenraum des zweiten Zylinders (270, 370) in ein drittes Volumen (271,371) und ein durch den zweiten Kolben (280,380) vom dritten Volumen (271,371) getrenntes viertes Volumen (272,372)aufgeteilt ist, und
wobei das dritte Volumen (271,371) mit dem vierten Volumen (272,372) über ein zweites Leitungssystem (290,390) verbunden ist, das einen Leitungsabschnitt (291,391) aufweist, in dem ein zweites Ventil (292,392) angeordnet ist.

7. Sperrvorrichtung (100,200,300) nach Anspruch 6, **dadurch gekennzeichnet, dass** das zweite Ventil ein Rückschlagventil ist.

8. Sperrvorrichtung (200,300) nach Anspruch 7, **dadurch gekennzeichnet, dass** in dem zweiten Leitungssystem (290,390) ein parallel zu dem Leitungsabschnitt (291,391), in dem das zweite Rückschlagventil (292,392) angeordnet ist, verlaufender paralleler Leitungsabschnitt (293,393) vorgesehen ist und dass ein zweites Ventil (295,395) zum Umschalten zwischen diesen Leitungsabschnitten (291,293,391,393) vorhanden ist.

9. Sperrvorrichtung (200,300) nach einem der Ansprüche 1 bis 8, **dadurch gekennzeichnet, dass** im zweiten Leitungssystem (290,390) ein Druckspeicher (296,396) für das Fluid vorgesehen ist.

10. Sperrvorrichtung (200,300) nach einem der Ansprüche 1 bis 9, **dadurch gekennzeichnet, dass** im zweiten Leitungssystem (290,390) eine Befüllkupplung (297,397) und/oder ein Entlüftungsventil (298,398) für das Fluid vorgesehen sind.

11. Sperrvorrichtung (100,200,300)nach einem der vorstehenden Ansprüche,
**dadurch gekennzeichnet, dass** an mindestens einem Zylinder (110,210,270,310,370)ein Druckspeicher vorgesehen ist.

12. Fahrgeschäft mit einem Sicherungsbügel, in welchen eine Sperrvorrichtung nach einem der Ansprüche 1 bis 11 eingesetzt ist.

## Claims

1. Locking device (100, 200, 300) for an axle (151, 251, 351) comprising a carrier (245) for an axle (151, 21, 351) or comprising an axle (151, 251, 351), a cylinder (110, 210, 310) for a fluid, which has a cylinder wall, and comprising a piston (120, 220, 320) which is arranged in the cylinder (110, 210, 310) and is sealed against the cylinder wall at least in sections or at certain points, so that the interior of the cylinder (110, 210, 310) is subdivided into a first volume (111, 211, 311) and a second volume (112, 212, 312), which is separated from the first volume (111, 211, 311) by the piston (120, 220, 320), and also comprising a mechanical connection (140, 240, 340) between the piston (120, 220, 320) on the one hand and the carrier (245) for the axle (151, 251, 351) or the axle (151, 251, 351) itself on the other hand, so that the position of the piston (120, 220, 320) in the cylinder (110, 210, 310) determines the orientation of the carrier (245) for the axle (151, 251, 351) or the orientation of the axle (151, 251, 351) itself, and vice versa, wherein the first volume (111, 211, 311) is connected to the second volume (112, 212, 312) via a line system (130, 230, 330) which has a line section (131, 231, 331) in which a non-return valve (132, 232, 332) is arranged, **characterised in that** the mechanical connection (140, 240, 340) is implemented as a toothing (121, 221, 321) which is provided in the piston (120, 220, 320) or on the piston (120, 220, 320) and engages directly or indirectly into a gear wheel (141, 241, 341) on which the carrier (245) for the axle (151, 251, 351) is arranged or which is formed by a portion of the axle (151, 251, 351).

2. Locking device (100, 200, 300) according to claim 1, **characterised in that** a parallel line section (133, 233, 333) extending parallel to the line section (131, 232, 332), in which the non-return valve (132, 232, 332) is arranged, is provided in the line system (130, 230, 330), and **in that** a valve (135, 235, 335) is provided for switching between these line sections (131, 133, 231, 233, 331, 333).

3. Locking device (100, 200, 300) according to one of the preceding claims, **characterised in that** a pressure accumulator (136, 236, 336) is provided as a volume compensator for the fluid in the line system (130, 230, 330).

4. Locking device (100, 200, 300) according to one of the preceding claims, **characterised in that** a filling coupling (137, 237, 337) and/or a venting valve (138, 238, 338) for the fluid are provided in the line system (130, 230, 330).

5. Locking device (100, 200, 300) according to one of the preceding claims, **characterised in that** restoring means are provided, which are configured so that they assist a movement of the piston (120, 220, 320) in a direction.

6. Locking device (200, 300) according to one of the preceding claims, **characterised in that** a further mechanical connection (240, 340) is provided between the carrier (245) for the axle (251, 351) or the axle itself and a second piston (280, 380), which is arranged in a second cylinder (270, 370), which has a second cylinder wall, for a fluid, so that the orientation of the carrier (245) for the axle or the orientation of the axle (251, 351) itself determines the position of the second piston (280, 380) in the second cylinder, wherein the second piston (280, 380) arranged in the second cylinder is sealed against the second cylinder wall, at least in sections or at certain points, so that the interior of the second cylinder (270, 370) is subdivided into a third volume (271, 371) and a fourth volume (272, 372), which is separated from the third volume by the second piston (280, 380), and wherein the third volume (271, 371) is connected to the fourth volume via a second line system (290, 390), which has a line section (291, 391) in which a second valve (292, 392) is arranged.

7. Locking device (100, 200, 300) according to claim 6, **characterised in that** the second valve is a non-return valve.

8. Locking device (200, 300) according to claim 7, **characterised in that** a parallel line section (293, 393), which extends parallel to the line section (291, 391) and in which the second non-return valve (292, 392) is arranged, is provided in the second line system (290, 390), and **in that** a second valve (295, 395) is provided for switching between these line sections (291, 293, 391, 393).

9. Locking device (200, 300) according to one of claims 1 to 8, **characterised in that** a pressure accumulator (296, 396) for the fluid is provided in the second line system (290, 390).

10. Locking device (200, 300) according to one of claims 1 to 9, **characterised in that** a filling coupling (297, 397) and/or a venting valve (298, 398) for the fluid are provided in the second line system (290, 390).

11. Locking device (100, 200, 300) according to one of the preceding claims, **characterised in that** a pressure accumulator is provided on at least one cylinder (110, 210, 270, 310, 370).

12. Amusement ride having a safety clip into which a locking device according to one of claims 1 to 11 is inserted.

## Revendications

1. Dispositif de blocage (100, 200, 300) d'un axe (151, 251, 351) comprenant :
un logement de réception (245) d'un axe (151, 21, 351) ou un axe (151, 251, 351),
un cylindre (110, 210, 310) renfermant un fluide qui comporte une paroi de cylindre,
un piston (120, 220, 320) monté dans le cylindre (110, 210, 310) qui est étanche au moins par zones ou par segments vis-à-vis de la paroi du cylindre de sorte que la chambre interne de ce cylindre (110, 210, 310) soit subdivisée en un premier volume (111, 211, 311) et un second volume (112, 212, 312) séparé du premier volume (111, 211, 311) par le piston (120, 220, 320),
une liaison mécanique (140, 240, 340) entre le piston (120, 220, 320) d'une part et le logement de réception (245) de l'axe (151, 251, 351) ou l'axe (151, 251, 351) d'autre part, de sorte que la position du piston (120, 220, 320) dans le cylindre (110, 210, 310) détermine l'orientation du logement de réception (245) de l'axe (151, 251, 351) ou l'orientation de l'axe (151, 251, 351) et inversement,
le premier volume (111, 211, 311) étant relié au second volume (112, 212, 312) par un système de conduite (130, 230, 330) qui comporte un segment de conduite (131, 231, 331) dans lequel est montée une soupape antiretour (132, 232, 332),
**caractérisé en ce que**
la liaison mécanique (140, 240, 340) est réalisée sous la forme d'une denture (121, 221, 321) située dans le piston (120, 220, 320) ou sur le piston (120, 220, 320), et qui engrène directement ou indirectement avec une roue dentée (141, 241, 341) sur laquelle est monté le logement de réception (245) de l'axe (151, 251, 351) ou qui est formée par un segment partiel de l'axe (151, 251, 351).

2. Dispositif de blocage (100, 200, 300) conforme à la revendication 1,
**caractérisé en ce qu'**
il est prévu, dans le système de conduite (130, 230, 330) un segment de conduite (133, 233, 333) s'étendant parallèlement au segment de conduite (131, 232, 332) dans lequel est montée la soupape antiretour (132, 232, 332), et **en ce qu'**il est prévu une soupape (135, 235, 335) permettant d'effectuer une commutation entre ces segments de conduite (131, 133, 231, 233, 331, 333).

3. Dispositif de blocage (100, 200, 300) conforme à l'une des revendications précédentes,
**caractérisé en ce qu'**
il est prévu un accumulateur de pression (136, 236, 336) réalisé sous la forme d'un compensateur de volume pour le fluide présent dans le système de conduite (130, 230, 330).

4. Dispositif de blocage (100, 200, 300) conforme à l'une des revendications précédentes,
**caractérisé en ce qu'**
il est prévu, dans le système de conduite (130, 230, 330) un couplage de remplissage (137, 237, 337) et/ou une soupape de dégazage (138, 238, 338) pour le fluide.

5. Dispositif de blocage (100, 200, 300) conforme à l'une des revendications précédentes,
**caractérisé en ce qu'**
il est prévu des moyens de rappel qui sont réalisés de façon à assister un déplacement du piston (120, 220, 320) dans une direction.

6. Dispositif de blocage (200, 300) conforme à l'une des revendications précédentes,
**caractérisé en ce qu'**
il est prévu une autre liaison mécanique (240, 340) entre le logement de réception (245) de l'axe (251, 351) ou l'axe (251, 351) et un second piston (280, 380) qui est monté dans un second cylindre (270, 370) renfermant un fluide qui comporte une seconde paroi cylindrique de sorte que l'orientation du logement de réception (245) de l'axe (251, 351) ou l'orientation de l'axe (251, 351) détermine la position du second piston (280, 380) dans le second cylindre (270, 370), le second piston (280, 380) monté dans le second cylindre (270, 370) étant rendu étanche au moins par segments ou par zones vis-à-vis de la seconde paroi cylindrique, de sorte que la chambre intérieure du second cylindre (270, 370) soit subdivisée en un troisième volume (271, 371) et en un quatrième volume (272, 372) séparé du troisième volume (271, 371) par le second piston (280, 380),
le troisième volume (271, 371) étant relié au quatrième volume (272, 372) par un second système de conduite (290, 390) qui comporte un segment de conduite (291, 391) dans lequel est montée une seconde soupape (292, 392).

7. Dispositif de blocage (100, 200, 300) conforme à la revendication 6,
**caractérisé en ce que**
la seconde soupape est une soupape antiretour.

8. Dispositif de blocage (200, 300) conforme à la revendication 7,
**caractérisé en ce qu'**
il est prévu, dans le second système de conduite (290, 390) un segment de conduite (293, 393) s'étendant parallèlement au segment de conduite (291, 391) dans lequel est montée la seconde soupape antiretour (292, 392), et une seconde soupape (295, 395) est prévue pour permettre d'effectuer une commutation entre ces segments de conduite (291, 293, 391, 393).

9. Dispositif de blocage (200, 300) conforme à l'une des revendications 1 à 8,
**caractérisé en ce qu'**
il est prévu, dans le second système de conduite (290, 390) un accumulateur de pression (296, 396) pour le fluide.

10. Dispositif de blocage (200, 300) conforme à l'une des revendications 1 à 9,
**caractérisé en ce qu'**
il est prévu dans le second système de conduite (290, 390) un couplage de remplissage (297, 397) et/ou une soupape de dégazage (298, 398) pour le fluide.

11. Dispositif de blocage (100, 200, 300) conforme à l'une des revendications précédentes,
**caractérisé en ce qu'**
il est prévu un accumulateur de pression sur au moins un cylindre (110, 210, 270, 310, 370).

12. Attraction foraine équipée d'un étrier de sécurité dans lequel est logé un dispositif de blocage conforme à l'une des revendications 1 à 11.
